Europäisches Patentamt

European Patent Office

Office européen des brevets

(11) Publication number: **0 496 461 A1**

## EUROPEAN PATENT APPLICATION

(21) Application number: **92200128.4**

(22) Date of filing: **17.01.92**

(51) Int. Cl.5: **G11B 23/087**, G11B 23/113, G11B 23/34, G11B 15/08

(30) Priority: **25.01.91 NL 9100126**
**12.11.91 NL 9101882**

(43) Date of publication of application:
**29.07.92 Bulletin 92/31**

(84) Designated Contracting States:
**AT BE CH DE DK ES FR GB GR IT LI LU NL PT SE**

(71) Applicant: **N.V. Philips' Gloeilampenfabrieken**
**Groenewoudseweg 1**
**NL-5621 BA Eindhoven(NL)**

(72) Inventor: **Vollmann, Norbert Christian**
**c/o INT. OCTROOIBUREAU B.V. Prof.**
**Holstlaan 6**
**NL-5656 AA Eindhoven(NL)**

(74) Representative: **Van Weele, Paul Johannes**
**Frits et al**
**INTERNATIONAAL OCTROOIBUREAU B.V.**
**Prof. Holstlaan 6**
**NL-5656 AA Eindhoven(NL)**

(54) **Cassette provided with magnetic tape and method of manufacturing the cassette.**

(57) A cassette (1) has two reel hubs (5A, 5B) between which a magnetic tape (7) can be transported in opposite directions. By means of a sticker (19) the magnetic tape is attached to the second reel hub (5B) *via* an end-tape portion (13B). The magnetic tape is attached to the first reel hub (5A) in a similar manner. Each of the stickers is provided with an optical code which can be read by a magnetic-tape apparatus comprising suitable read means and which is indicative of at least one variable pertaining to the cassette, such as the position of the magnetic tape, the cassette manufacturer, an order number etc. In a suitable embodiment the code is, for example, a bar code comprising a plurality of bars (23) extending transversely of the longitudinal direction of the magnetic tape (7).

FIG.5

The invention relates to a cassette comprising a first and a second reel hub, a length of magnetic tape which can be transported between and wound onto the reel hubs, a first end-tape portion attached to the first reel hub and a second end-tape portion attached to the second reel hub, which end-tape portions are each attached to the magnetic tape by means of a sticker.

It is common practice to attach the magnetic tape in magnetic-tape cassettes to the reel hubs by means of a so-called "leader tape" and a "trailer tape". The cassette to be loaded with magnetic tape is often a so-called "zero cassette", which does not yet contain magnetic tape but whose reel hubs have already been connected to each other by a length of end tape. The end tape is pulled out of the zero cassette and severed by a loading machine. The two end-tape portions, each attached to one of the reel hubs, form the leader tape and the trailer tape. The magnetic tape is attached to one of the end-tape portions, for example by means of a sticker, after which the required length of magnetic tape can be wound into the cassette. Once the required length has been loaded the magnetic tape can be severed and attached to the other end-tape portion by means of a sticker. For a method of this kind and a suitable arrangement for carrying out the method reference is made to two United States Patent Specifications 4,699,328 and 4,632,327 (PHN 10.810, herewith incorporated by reference).

The invention aims at providing an improved cassette of the type defined in the opening paragraph and providing it with new advantageous features and is characterized in that at least one of the two stickers has been provided with a code which is optically detectable by an apparatus suitable for playing the magnetic tape, which code is indicative for at least one variable pertaining to the cassette.

It is known *per se* to provide a cassette with information about a variable relating to the cassette. For example, the printing or labelling of the cassette may provide information about specific variables. It is also known to provide the housing of a cassette with one or more openings or recesses defining a variable in coded form. In the cassette in accordance with the invention the sticker, which is present anyway, is provided with an optically detectable code. In a preferred embodiment of the invention this code may be indicative of a position of the magnetic tape. In this way the transport of the magnetic tape can be stopped or reversed by optical detection of the code on the sticker.

It is to be noted that it is known *per se* to use the sticker for stopping or reversing the tape transport. The sticker may be, for example, reflecting, enabling the difference in reflection between the sticker on the one hand and the magnetic tape and the end-tape portion on the other hand to be detected optically, so that a signal can be generated. Drawbacks of this are that the difference in reflection is not always adequate and, moreover, that the generated signal does not provide an indication about the tape-transport direction. Besides, it is also known *per se* to provide magnetic tapes with codes, for example relating to the position of the magnetic tape, see for example Patent Application WO 81/03082 (herewith incorporated by reference). The code takes the form of holes in the magnetic tape which through a specific pattern mark the end or the beginning of the magnetic tape. It is obvious that such a code can only be optically detected in transmission, so that at both sides of the tape provisions are needed to ensure that, on the one hand, the opening transmits enough light to the other side of the tape and, on the other hand, the transmitted light is detected at the other side. Drawbacks are that the presence of the openings weakens the magnetic tape, that in the case of narrow tapes the holes must be very small, and that the need to provide openings in the magnetic tape interferes with the rapid manufacture of magnetic-tape cassettes.

A suitable embodiment of the invention is characterized in that the code is a bar code comprising a plurality of bars extending transversely of the longitudinal direction of the magnetic tape. Such a code can be applied easily to the sticker and is optically detectable in an easy manner, even when viewed in the transverse direction of the magnetic tape the optical means have been positioned non-critically at a specific location. This embodiment can be combined excellently with a further embodiment which is characterized in that the code comprises both a code which is indicative of reaching of a starting position and a code which is indicative of reaching of an end position on the magnetic tape, which code for the starting position is situated at the side of the nearest reel hub. The use of this embodiment not only enables the end of the magnetic tape to be detected but also enables a discrimination between the two directions of transport of the magnetic tape. This effectively precludes an undesirable effect known from cassettes provided with a reflecting sticker to signal the end of tape. During fast winding, since braking of the reels requires a certain time, the transport of the magnetic tape will not be stopped instantaneously, resulting in a specific overshoot of the sticker after detection. If the transport direction is subsequently reversed the optical detection device will again detect the passage of the sticker, so that the transport of the magnetic tape is stopped again. However, in many cases this is not desired. In most cases the magnetic tape is to be moved in the opposite transport direction. When the invention is utilised this effect need not occur because it is possible to discriminate between the two transport directions.

A further embodiment of the invention is characterized in that the code is indicative of at least one of the following variables: thickness of the magnetic tape, length of the magnetic tape, manufacturer of the magnetic tape, manufacturer of the cassette, country of origin of the magnetic tape, date and, at option, time of production of the magnetic tape, date and, at option, time of production of the cassette, a production sequence number, an order number, a serial number, a machine number, name(s) of performer(s) of a piece of music recorded on the magnetic tape, name of the studio where the music has been recorded, a licence number of the cassette manufacturer, a licence number of a music company, the standard with which the cassette complies.

In a further embodiment the code has a form which is particularly easy and, simple to detect and is characterized in that the bar code comprises a regular pattern of alternately more and less reflecting zones, the pattern beginning with a more reflecting zone at one end and ending with a less reflecting zone at the other end.

The invention relates not only to a cassette but also to a method of manufacturing a cassette. The method comprises the manufacture of an empty cassette, the connection of an end-tape portion to each of the reel hubs, splicing of the end-tape portions to the magnetic tape by means of stickers, and winding of the magnetic tape into the cassette by means of a loading machine. The new method is characterized in that in the proximity of the loading machine the stickers are provided with a code, briefly before the stickers are applied. It is advantageous to use another embodiment which is characterized in that the code is applied by a computer-controlled printer arranged in the proximity of the loading machine. This provides a very flexible method of recording variable information on the sticker in the form of a suitable code. For example, in this way time-dependent information can be included in the code and information pertaining to the number of products made on the machine can also be encoded very easily.

The invention will now be described in more detail on the basis of non-limitative examples with reference to the drawings, in which

Fig. 1 is a plan view of a magnetic-tape cassette,

Fig. 2 is a front view of the cassette shown in Fig. 1,

Fig. 3 shows to a strongly enlarged scale a part of a magnetic tape, an end-tape portion attached thereto and a sticker in accordance with the prior art,

Fig. 4 is a graph of the output signal of an optical sensor which detects the presence of a prior-art sticker,

Fig. 5 is a strongly enlarged-scale view of a magnetic tape, an end-tape portion attached thereto and a sticker provided with an optically detectable code in accordance with the invention,

Fig. 6 is a graph similar to that of Fig. 2 but now of the output signal of a sensor upon detection of the code of the sticker shown in Fig. 3, and

Fig. 7 shows very diagrammatically a part of an arrangement for manufacturing cassettes provided with a sticker with an optically detectable code.

Fig. 8 is a view of a preferred bar code pattern.

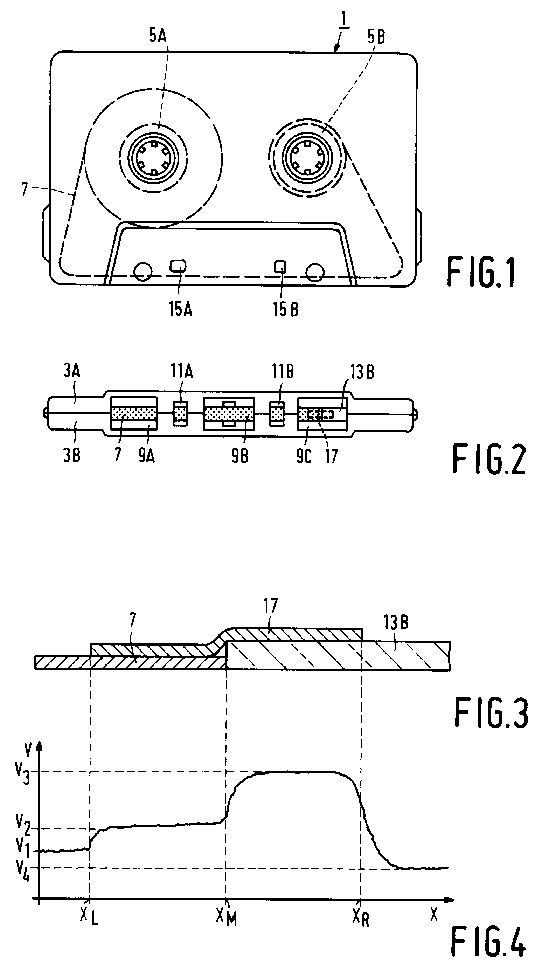

Figs. 1 and 2 relate to the prior-art Compact Cassette for analog sound recording. Since cassettes of this type are well known only a brief description will be given. The cassette 1 comprises a plastics housing made up of two halves 3A and 3B secured to one another. The housing accommodates two reel hubs 5A and 5B and a length of magnetic tape 7 which can be transported between and wound onto the reel hubs. The cassette housing has three larger openings 9A, 9B and 9C and two smaller openings 11A and 11B in its front side. The opening 9B gives a magnetic-head unit access to the magnetic tape and the openings 9A and 9C allows the passage of a pressure roller. The smaller openings 11A and 11B can be used for other purposes. The magnetic tape 7 is attached both to the first reel hub 5A and to the second reel hub 5B by means of an end-tape portion. Fig. 2 shows a part of an end-tape portion 13B by which the magnetic tape 7 is attached to the reel hub 5B. An identical end-tape portion, not shown, is attached to the reel hub 5A. The end-tape portions may, for example, be transparent, as is customary with Compact Cassettes. In this way the position of the magnetic tape can be detected by the optical means *via* the openings 15A and 15B and the openings 11A and 11B at the instant at which the transparent end-tape portion is detected or a sticker is detected. The end-tape portion 13B is attached to the magnetic tape 7 by means of a sticker 17. The sticker is situated at the back of the magnetic tape, so that the sticker can never contact the magnetic-head means situated in the opening 9B. The end-tape portion attached to the reel hub 5A is identically affixed to the magnetic tape 7 by means of a sticker.

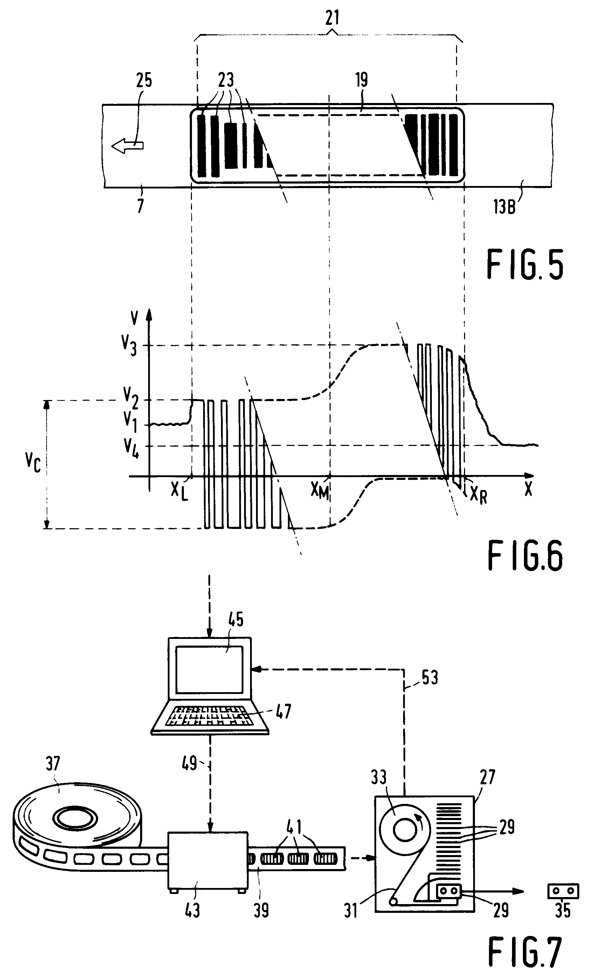

Fig. 3 is a sectional view of a part of the magnetic tape 7 and the end-tape portion 13B at the location of the sticker 17, its scale being strongly enlarged for the sake of clarity. Fig. 4 shows diagrammatically a graph of the output voltage of an optical sensor, which optically detects the presence of the sticker 17 through differences in refection. The output signal V of the sensor has been plotted vertically and the position X along the magnetic tape has been plotted horizontally. The output signal is V1 as long as the sensor detects the reflection from the back of the magnetic tape 7. At the instant at which the position $X_L$ is reached, which marks the left-hand side of the sticker 17 shown in the drawing, an increased reflection will be observed because the back of the sticker 17 reflects the light better than the back of the magnetic tape 7. As a result of this, the output voltage is found to increase from V1 to V2. As is shown in Fig. 3, the end-tape portion 13B is slightly thicker than the magnetic tape 7. It is common practice to use a slightly thicker end-tape portion in view of the tensile forces which can arise in the end-tape portion when the end of the tape is reached during fast winding. As can be seen in Fig. 3, the part of the sticker from the point $X_M$, which is the transition between the magnetic tape and the end-tape portion, is situated at another level. This causes the amount of reflected light observed by the sensor to increase from V2 to V3. After the position $X_R$ has been reached, which position is defined by the right-hand end of the sticker 17, the signal is dictated by the reflection from the back of the end-tape portion 13B and has a value V4. In practice it is comparatively difficult to detect the presence of the sticker with adequate certainty because of the fairly small differences between the signal levels. It is even more difficult to detect whether transport is effected in the direction from the reel hub 5A to the reel hub 5B or *vice versa*.

Figs. 5 and 6 relate to a situation in which the sticker 17 has been removed from the magnetic tape 7 and the end-tape portion 13B and has been replaced by a sticker 19 which, in accordance with the invention, has been provided with an optically detectable code. In contradistinction to Fig. 3 Fig. 5 is a plan view instead of a sectional view. In its code area 21 the sticker 19 has been provided with a code which can be detected optically by a magnetic-tape apparatus. The code is indicative of at least one variable pertaining to the cassette 1. The code is indicative of, for example, a position of the magnetic tape 7, so that detection of the presence of the sticker can be used for the purpose of switching-off or switching-over. The code is a bar code comprising a plurality of bars 23 extending transversely of the longitudinal direction of the magnetic tape. For the sake of simplicity only some of these bars are shown. However, the code area 21 may be provided with a much larger number of bars. The bars shown in Fig. 5 have been given merely by way of illustration and have no practical significance. The bars may be of different length and/or width and may be spaced at different distances from one another, for example in conformity with the wellknown bar code. In Fig. 5 a code which is indicative of the end position of the magnetic tape is situated at the left-hand side of the sticker 19, *i.e.* the end of the sticker which is situated at the side of the magnetic tape 7. When the magnetic tape is moved in a transport direction symbolized by an arrow 25 in Fig. 5 an optical detection device will detect the code indicative of reaching the end position, after which the transport of the magnetic tape can be stopped or can be reversed. If before the magnetic tape has stopped the entire sticker has moved past the detection device and the transport direction is reversed, *i.e.* to obtain a transport direction opposite to the transport direction symbolized by the arrow 25, the right-hand part of the sticker 19 will first pass the detection device. In contradistinction to the prior-art this will not result in the magnetic-tape transport being stopped or reversed again. This is because the bar pattern at the right-hand side of the sticker contains a code which is indicative of the beginning of the magnetic tape. Consequently, the circuit connected to the detector will receive information about the fact that the magnetic tape is in a new starting position, which makes it possible to prevent the tape transport from being stopped or reversed again.

Fig. 6 shows diagrammatically a graph of an optical sensor which optically detects the presence of the sticker from differences in reflection. The parameters plotted along the axes correspond to those in Fig. 4. Assuming that the area of the sticker 19 outside the bar pattern has the same reflectivity as the sticker 17, the output voltage of the sensor in this case will also increase from $V_1$ to $V_2$ at the instant at which the position $X_L$ is reached. If it is also assumed that the stickers 17 and 19 have the same thickness the output signal will increase to the value $V_M$ when the position $X_M$ is reached and the splicing-tape areas not occupied by the bar code are detected. However, in contrast with the situation in which the sticker 17 is used, abrupt decreases in the reflectivity at the location of the bars will be observed, which decreases have a value $V_c$ which depends on the reflectivity of the bars. By making these bars deep black substantial changes in reflectivity can be obtained.

It will be evident from the above that the upper envelope of the curve in Fig. 6 is equal to the curve in Fig. 4. Where necessary, this envelope is shown in broken lines in Fig. 6. The lower envelope follows the upper envelope at a distance $V_c$, *i.e.* between the positions $X_A$ and $X_R$.

The presence of the sticker 19 can be detected more effectively than the presence of the sticker 17 for two reasons. In the first place, the variations in the output voltage of the sensor are substantially larger. In the second place, the pulse-shaped voltage variations succeed one another more rapidly. This enables the sensor to discriminate better between the presence and absence of sticker. This is not influenced by variations in output voltage as a result of variations in basic reflectivity of magnetic tapes, end-tape portions and stickers or as a result of ambient light.

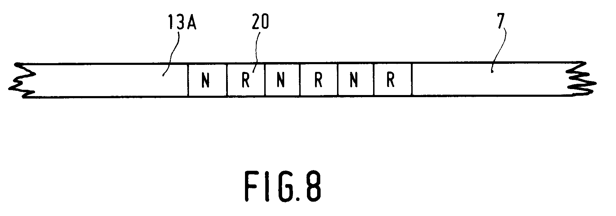

In Fig. 8, the magnetic tape 7 is attached to the non-magnetic end-tape portion 13A by a sticker 20 which has been provided with a regular pattern of alternately well reflecting zones R and hardly reflecting zones N. The pattern ends with an R-zone at its right-hand end and with an N-zone at its left-hand end.

In addition to the codes of the kind already described the sticker may be provided with all kinds of other codes, for example one or more codes indicative of one of the following variables: thickness of the magnetic tape, length of the magnetic tape, manufacturer of the magnetic tape, manufacturer of the cassette, date and possibly time of production of the magnetic tape, date and possibly time of production of the cassette, a production sequence number, an order number, a serial number, a machine number, name(s) of performer(s) of a piece of music recorded on the magnetic tape, name of the studio where the music has been recorded, licence number of the cassette manufacturer, licence number of a music company, the standard with which the cassette complies. It is possible to use time-dependent and/or location-dependent codes, pertaining for example to the date and time of the day on which the cassette has been manufactured, a production sequence number, an order number or a serial number or machine number. The last number is indicative of the machine on which the cassette has been manufactured.

Fig. 7 shows very diagrammatically an arrangement which has many advantages and which is eminently suitable in the case that the sticker is to be provided with location and/or time-dependent information. The various parts of the Figure are shown to entirely different arbitrary scales, so that the dimensions of the various parts do not follow from the Figure. The arrangement comprises a loading machine 27 adapted to load zero-cassettes 29, which can be fed automatically to the loading machine in a suitable manner. The zero-cassettes are loaded with a magnetic tape provided with prerecorded music, which tape is contained on a supply reel 33. For further information about a loading machine for cassettes reference is made to the afore-mentioned United States Patent Specifications 4,699,328 and 4,632,327. However, there are also numerous other known loading machines than those disclosed in said two United States patent Specifications, many of which are suitable for loading other types of cassettes. Loading the zero-cassettes with magnetic tape 31 is effected in a manner as described hereinbefore, the magnetic tape being attached to the end-tape portions by means of stickers. The finished product is a so-called music cassette 35. The necessary stickers are supplied from a supply roller 37 comprising a wound ribbon-shaped base 39 provided with spaced-apart stickers 41. In known manner the surface of the ribbon-shaped base 39 has been processed in such a way that the stickers 41 stick to the surface but can readily be removed therefrom without being damaged.

In a method in accordance with the invention the stickers are printed with a bar code briefly before the stickers are applied, which is effected in the proximity of the loading machine 27. The codes are applied by means of a computer-controlled printer 43. By suitable means, not shown, the ribbon-shaped base 39 is fed at a speed adapted to the specification of the loading machine 27. The loading machine 27 has been provided, in a manner not shown, with means for suitably removing the stickers 41 from the ribbon-shaped base 39 for the purpose of splicing the magnetic tape 31 to an end-tape portion of a zero-cassette 29. In the aforementioned known loading machines in accordance with the two United States Patent Specifications the supply reel with stickers is placed directly on the loading machine. The printer 43 may be a so-called contactless printer, such as an ink-jet printer or a laser printer, but may also be a matrix printer or the like. Such printers are very suitable for computer-controlled printing. In the diagram shown in Fig. 7 controlling is effected by means of a computer which is represented symbolically by the reference numeral 45. The computer has a keyboard 47 by means of which a user can locally enter instructions and information. A broken-line arrow 53 indicates symbolically that the computer can also receive information from the loading machine 27. In this way the loading machine can supply the computer with information about the status of the loading machine, for example whether the machine is stationary to replace a supply reel 33 or whether the machine is in a normal production mode. Moreover, *via* suitable counting means, it is possible to provide information about the number of manufactured music cassettes 35, so that information pertaining to a production number, a sequence number or the like can be included in the bar code. *Via* the line 53 or *via* the keyboard 47 or from outside it is possible to supply the computer with information relating to the machine number of the loading machine 27, so that the printer 43 can insert the machine-number information in the bar code on the stickers 41. This leads to a very flexible arrangement, enabling time and location-dependent information to be included in the bar code. The printer 43 can also print information about the order number on the stickers. The order number may be entered for example *via* the keyboard 47 by the operator of the loading machine 27. At the instant at which a new supply reel 33 is mounted, which carries another music programme for another client, the code for the order number on the stickers can be adapted on the spot.

The invention extends not only to the embodiments shown in the drawings and described hereinbefore but also to any further embodiments possible within the scope as defined by the Claims. For example, the code on the stickers may comprise not only a bar code but any other code which can or cannot be detected with the aid of optical detection means. This is not restricted to detection based on reflectivity variations but it is also possible, for example, to utilise optically detectable level differences in the surface of the sticker, as is customary in optical information carriers, for example for audio, video or data. In the arrangement shown in Fig. 7 the computer 45 and the printer 43 may be integrated with the loading machine 27 to form a fully computer-controlled loading machine. The magnetic tape and the end-tape portions need not be made of different materials; they may even be integral with one another. Also in these cases the presence of a sticker provided with coded information will be of advantage. Other kinds of information as heretofore disclosed may be coded onto the stickers. The two stickers used in a cassette may or may not be identical.

## Claims

1. A cassette (1) comprising a first and a second reel hub (5A, 5B), a length of magnetic tape (7) which can be transported between and wound onto the reel hubs, a first end-tape portion attached to the first reel hub (5A) and a second end-tape portion (13B) attached to the second reel hub (5B), which end-tape portions are each attached to the magnetic tape by means of a sticker (19), characterized in that at least one of the two stickers (19) has been provided with a code which is optically detectable by an apparatus suitable for playing the magnetic tape, which code is indicative for at least one variable pertaining to the cassette (1).

2. A cassette as claimed in Claim 1, characterized in that the code is indicative of a position of the magnetic tape (7).

3. A cassette as claimed in Claim 2, characterized in that the code is a bar code comprising a plurality of bars (23) extending transversely of the longitudinal direction of the magnetic tape (7).

4. A cassette as claimed in Claims 2 and 3, characterized in that the code comprises both a code which is indicative of reaching of a starting position and a code which is indicative of reaching of an end position on the magnetic tape, which code for the starting position is situated at the side of the nearest reel hub.

5. A cassette as claimed in Claim 1, characterized in that the code is indicative of at least one of the following variables: thickness of the magnetic tape, length of the magnetic tape, manufacturer of the magnetic tape, manufacturer of the cassette, country of origin of the magnetic tape, date and, at option, time of production of the magnetic tape, date and, at option, time of production of the cassette, a production sequence number, an order number, a serial number, a machine number, name(s) of performer(s) of a piece of music recorded on the magnetic tape, name of the studio where the music has been recorded, a licence number of the cassette manufacturer, a licence number of a music company, the standard with which the cassette complies.

6. A cassette as claimed in Claim 3, characterized in that the bar code comprises a regular pattern of alternately more and less reflecting zones, the pattern beginning with a more reflecting zone at one end and ending with a less reflecting zone at the other end.

7. A method of manufacturing a cassette (35) as claimed in Claim 1, comprising the manufacture of an empty cassette (29), the connection of an end-tape portion to each of the reel hubs, splicing of the end-tape portions to the magnetic tape (31) by means of stickers (41), and winding of the magnetic tape into the cassette by means of a loading machine (27), characterized in that in the proximity of the loading machine (27) the stickers (41) are provided with a code, briefly before the stickers are applied.

8. A method as claimed in Claim 7, characterized in that the code is applied by a computer-controlled printer (43) arranged in the proximity of the loading machine (27).

FIG.1

FIG.2

FIG.3

FIG.4

FIG.5

FIG.6

FIG.7

FIG.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 505 985 (TELEFUNKEN FERNSEH UND RUNDFUNK GMBH) <br> * page 5 - page 7; figures * <br> --- | 1-6 | G11B23/087 <br> G11B23/113 <br> G11B23/34 <br> G11B15/08 |
| A | PATENT ABSTRACTS OF JAPAN <br> vol. 8, no. 282 (P-323)(1719) 22 December 1984 <br> & JP-A-59 146 489 ( FUJITSU K.K. ) 22 August 1984 <br> * abstract * <br> --- | 1-3,5 | |
| A | DE-A-3 016 677 (F.I.L.P. SPA) <br> * page 6 - page 8; claims 1-4; figures * <br> --- | 1,3-5 | |
| A | EP-A-0 277 778 (TAPE AUTOMATION LTD.) <br><br> * abstract; figures * <br> --- | 1-3,5,7, 8 | |
| A | EP-A-0 347 074 (MINNESOTA MINING AND MANUFACTURING CO.) <br> * abstract; figures * <br> --- | 1,2,4,5 | |
| A | US-A-3 917 184 (J.L.KING) <br> * column 1, line 33 - column 2, line 33; figures * <br> --- | 1,2,7 | TECHNICAL FIELDS SEARCHED (Int. Cl.5) <br><br> G11B |
| A | PATENT ABSTRACTS OF JAPAN <br> vol. 6, no. 88 (P-118)(966) 26 May 1982 <br> & JP-A-57 024 048 ( TOKYO SHIBAURA DENKI K.K. ) 8 February 1982 <br> * abstract * <br> --- | 1,2 | |
| A | US-A-4 742 406 (Y.TURUDA) <br> * column 4, line 47 - column 5, line 25; figures * <br> --- | 1,2 | |
| A | WO-A-8 912 299 (NEWELL RESEARCH CORP.) <br> --- | | |
| A | EP-A-0 134 917 (GRUNDIG E.M.V.) <br> --- | | |
| | -/-- | | |

The present search report has been drawn up for all claims

| Place of search | Date of completion of the search | Examiner |
|---|---|---|
| THE HAGUE | 29 APRIL 1992 | DECLAT M.G. |

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | WO-A-8 103 082 (NEWELL RESEARCH CORP.) | | |
| | ----- | | |
| | | | **TECHNICAL FIELDS SEARCHED (Int. Cl.5)** |

The present search report has been drawn up for all claims

| Place of search | Date of completion of the search | Examiner |
|---|---|---|
| THE HAGUE | 29 APRIL 1992 | DECLAT M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)